(19) Europäisches Patentamt
European Patent Office
Office européen des brevets

(11) Numéro de publication: **0 036 829 B1**

# (12) FASCICULE DE BREVET EUROPEEN

(45) Date de publication du fascicule du brevet: **07.09.83**

(51) Int. Cl.³: **C 08 L 1/02,** D 01 F 6/90

(21) Numéro de dépôt: **81420034.1**

(22) Date de dépôt: **12.03.81**

(54) **Solutions conformables issues de mélanges de cellulose et polyamide-imide et articles en forme obtenus ainsi que leur procédé d'obtention.**

(30) Priorité: **14.03.80 FR 8006069**

(43) Date de publication de la demande:
**30.09.81 Bulletin 81/39**

(45) Mention de la délivrance du brevet:
**07.09.83 Bulletin 83/36**

(84) Etats contractants désignés:
**AT BE CH DE GB IT LI NL SE**

(56) Documents cités:
**BE-A-438 483**
**FR-A-2 114 184**
**FR-A-2 165 236**
**CHEMICAL ABSTRACTS, vol. 87, no. 18, 31 octobre 1977, page 82, réf. 137 510g. Columbus, Ohio, US R. B. SEYMOUR et al. »Solutions of cellulose in organic solvents«**
**CHEMICAL ABSTRACTS, vol. 78, no. 16, 23 avril 1973, page 105, réf. 99 373u Columbus, Ohio, USA**

(73) Titulaire: **RHONE-POULENC-TEXTILE, 22, Avenue Montaigne, F-75008 Paris (FR)**

(72) Inventeur: **Chion, Pierre, 27, rue Alexis Carrel, F-69500 Bron (FR)**
Inventeur: **Menault, Jacques, 5, Avenue Louis Momet, F-69260 Charbonnieres-Les-Bains (FR)**
Inventeur: **Rodier, Henry, 8, Boulevard de L'Europe, F-69110 Ste-Foy-Les-Lyon (FR)**

(74) Mandataire: **Prud'Homme, Simone et al, RHONE-POULENC-TEXTILE Direction Technique-Brevets BP 82-41, F-69355 Lyon Cedex 2 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Solutions conformables issues de mélanges de cellulose et polyamide-imide et articles en forme obtenus ainsi que leur procédé d'obtention

La présente invention concerne de nouvelles solutions conformables capables d'être mises sous forme de fils, fibres, films, membranes, pellicules, etc. ainsi qu'un procédé pour leur obtention. Elle concerne également les fils et fibres obtenus à partir de ces solutions ainsi que le procédé d'obtention desdits fils et fibres.

Plus particulièrement la présente invention concerne des solutions conformables contenant de la cellulose et un polyamide-imide, leur procédé d'obtention ainsi que les articles en forme obtenus à partir de telles solutions.

Ces solutions facilement conformables sont constituées de:

— cellulose de degré de polymérisation au moins 200
— polyamide-imide
— diméthylsulfoxyde
— formaldéhyde

dans lesquelles le rapport pondéral cellulose/polyamide-imide est compris entre 0,05 et 1, le rapport pondéral formaldéhyde/cellulose est compris entre 0,2 et 2, la concentration totale en polymères des solutions est comprise entre 6 et 25% en poids.

Pour l'obtention de fils et fibres, on préfère généralement utiliser des solutions de concentration en polymères comprise entre 15 et 20% en poids, de teneur en eau inférieure ou égale à 5000 ppm, et comportant un rapport pondéral cellulose/polyamide-imide compris entre 0,1 et 1.

L'invention concerne également un procédé d'obtention des solutions conformables par addition du polyamide-imide à une solution dans un mélange de diméthylsulfoxyde (DMSO) et formaldéhyde, de cellulose de degré de polymérisation au moins 200, préalablement séchée, la concentration totale en polymères étant comprise entre 6 et 25%, en poids et le rapport pondéral cellulose/polyamide-imide entre 0,05 et 1; le polyamide-imide peut se présenter sous forme de poudre ou déjà en solution dans le diméthylsulfoxyde.

La présente invention concerne également des filaments, fibres, fils à base de cellulose et de polyamide-imide dans un rapport pondéral cellulose/polyamide-imide compris entre 0,05 et 1, de préférence entre 0,1 et 1 dans lesquels chaque polymère se présente sous forme de fibrilles sensiblement orientées suivant l'axe de la fibre, étroitement entrecroisées entre elles, les macromolécules de cellulose étant partiellement engagées dans un réseau cristallin tridimensionnel caractéristique de la cellulose II.

Les fils et fibres selon l'invention présentent en outre un pouvoir de rétention d'eau déterminé selon la norme DIN 53 814 d'au moins 20%, de préférence au moins 30% en poids.

La présente invention concerne enfin un procédé d'obtention desdits fils et fibres, par filage à l'humide des solutions selon l'invention dans lesquelles la concentration totale en polymères est comprise entre 6 et 25% dans un bain coagulant constitué de 25 à 80% en volume d'eau et 75 à 20% en volume de diméthylsulfoxyde, ledit bain étant maintenu entre 0 et 40°C, orientation des filaments, élimination du solvant et surétirage desdits filaments.

Pour la préparation des solutions selon l'invention, on peut utiliser de la cellulose I, dite native, de toute provenance, par exemple des linters de coton, de la pâte de bois, ou de la cellulose II, possédant un degré de polymérisation d'au moins 200, provenant par exemple de déchets de fibres ou films de cellulose régénérée ou d'alcali-cellulose, neutralisée et lavée.

Les polyamide-imides selon la présente invention sont constitués par:

– des enchaînements amide-imide (A) de formule:

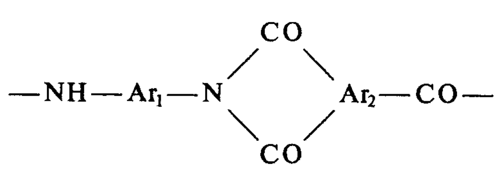

– éventuellement des enchaînements amide (B) de formule:

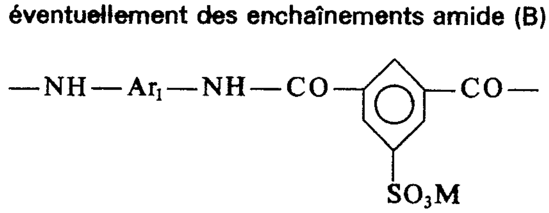

et éventuellement des enchaînements amide (C) de formule:

$$—NH—Ar_1—NH—CO—R—CO—$$

dans lesquels:

$Ar_1$ représente un radical aromatique divalent tel que

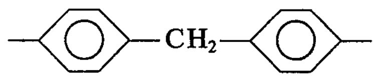

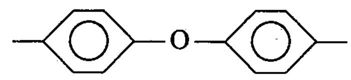

ou

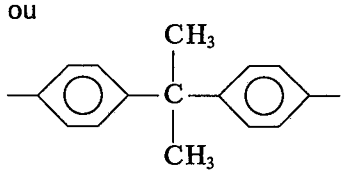

$Ar_2$ représente un radical aromatique trivalent tel que –

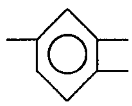

R représente un radical divalent tel que

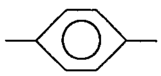

M représente un métal alcalin ou alcalino-terreux,

et les enchaînements (B), lorsqu'ils sont présents représentent au moins 3% du nombre total des enchaînements A, B et C.

La cellulose de départ, de degré de polymérisation au moins 200, est déchiquetée, séchée si nécessaire puis on effectue un prégonflement de cette dernière dans le DMSO, éventuellement séché au préalable. Après quoi, le formaldéhyde sous forme de paraformaldéhyde est ajouté et la température élevée jusqu'à une température comprise de préference entre 90 et 140°C selon le procédé décrit dans la demande de brevet français 2 358 435 de la demanderesse publiée le 10. 02. 1978.

Le rapport pondéral formaldéhyde/cellulose dépend en grande partie de la cellulose utilisée. Il est en général préférable d'utiliser un rapport formaldéhyde/cellulose d'autant plus élevé que la cellulose employée présente une accessibilité moins grande. En pratique, il est préférable pour dissoudre la cellulose I d'utiliser un rapport formaldéhyde/cellulose d'au moins 1, tandis que pour la cellulose II, on peut utiliser un rapport d'au moins 0,6 au stade de la dissolution.

Pour faciliter la transformation ultérieure, ce rapport peut ensuite être éventuellement diminué à une valeur comprise entre 0,2 et 2 par élimination du formaldéhyde, par tout moyen connu, tel que l'entraînement par un gaz anhydre de préférence inerte, ou la distillation sous pression réduite, sans risque de formation de gel ou de coagulation, à condition toutefois que le rapport formaldéhyde/cellulose reste au moins égal à 0,2.

De préférence, le formaldéhyde utilisé dans la présente invention est sous forme de paraformaldéhyde.

Il est souhaitable également que la teneur en eau des différents réactifs soit faible, par exemple que la teneur en eau de la cellulose soit inférieure à 1%, celle du diméthylsulfoxyde inférieure ou égale à 1% et celle du paraformaldéhyde inférieure à 4% en poids.

Les solutions selon l'invention peuvent être utilisées pour l'obtention d'articles très divers tels que fils, fibres, films, feuilles, pellicules, etc.

Les solutions qui conviennent pour le filage sont celles de concentration totale en polymères comprise entre 16 et 25%, de préférence 15 et 20%, en poids dont le rapport cellulose/polyamide-imide est compris entre 0,05 et 1 et de teneur en eau inférieure à 5000 ppm. Toútefois, pour la réalisation d'un filage industriel rentable et l'obtention de fibres de bonnes caractéristiques, cette concentration en polymère sera d'au moins 15%, de préférence comprise entre 15 et 20%, en poids et le rapport cellulose/polyamide-imide compris entre 0,1 et 1. Lesdites solutions peuvent être filées à sec selon tout procédé connu de l'homme de l'art, par exemple selon la demande de brevet français n°

2 372 251 publiée le 23. 06. 78. Dans ce cas, le polyamide-imide utilisé contient de préférence seulement des enchaînements A et C tels que définis ci-dessus. De préférence, elles sont filées dans un bain coagulant constitué essentiellement d'eau et de diméthylsulfoxyde en proportions respectives comprises entre 25%/75% et 80%/20% en volume, le bain étant maintenu à une température comprise entre 0 et 40°C. Les filaments subissent une orientation moléculaire qui peut être effectuée dans le bain coagulant ou ultérieurement par étirage en une ou plusieurs fois, par exemple dans l'air, dans un bain aqueux ou dans les deux successivement, puis un surétirage à température supérieure à 280°C. Dans le cas où les solutions selon l'invention sont filées à l'humide, le polyamide-imide contient obligatoirement des enchaînements (B).

Après leur sortie du bain coagulant, les filaments sont débarrassés du solvant par lavage à l'eau avant, pendant ou après étirage. Le lavage peut également être effectué au moyen de solutions diluées d'ammoniaque pour éviter le collage des brins. Ensuite, les filaments peuvent être avantageusement lavés à l'eau, puis ensimés, séchés et surétirés.

Les fils et fibres selon la présente invention comprennent des fibrilles de polyamide-imide sensiblement orientées dans le sens de l'axe de la fibre étroitement entremêlées avec des fibrilles de cellulose qui sont sensiblement orientées dans l'axe de la fibre, les macromolécules de la cellulose étant partiellement engagées dans un réseau cristallin tridimensionnel caractéristique de la cellulose II.

Les fils et fibres ainsi obtenus possèdent à la fois un bon pouvoir absorbant, une bonne affinité tinctoriale et une excellente antistaticité ainsi qu'une bonne tenue à la lumière. Il est surprenant de constater que les articles issus de mélanges de cellulose et de polyamide-imide conservent leurs caractéristiques mécaniques même après exposition prolongée à la lumière, alors que les articles en polyamide-imide seul perdent une partie de leurs propriétés dans les mêmes conditions.

Le pouvoir de rétention d'eau desdits fils et fibres est déterminé selon la norme DIN 53 814. Il est d'au moins 20% de préférence au moins 30% en poids. En général, il est compris entre 20 et 80% plus particulièrement entre 30 et 80% en poids alors que celui des fibres de polyamide-imide exemptes de cellulose est de l'ordre de 10% en poids. Cette caractéristique donne aux fibres un grand confort au porter en absorbant rapidement l'humidité corporelle qui peut ensuite s'évaporer de la surface du textile.

Il est également possible d'obtenir, à partir de solutions selon l'invention, des films, feuilles, pellicules, etc. selon tout procédé connu.

Les exemples qui suivent dans lesquels les parties et pourcentages, sauf indication contraire, s'entendent en poids sont donnés à titre indicatif mais non limitatif pour illustrer l'invention.

## Exemple 1

A. On prépare une solution à 19% en poids dans le diméthylsulfoxyde d'un polyamide-imide constitué de 80% d'unités amide-imide de formule:

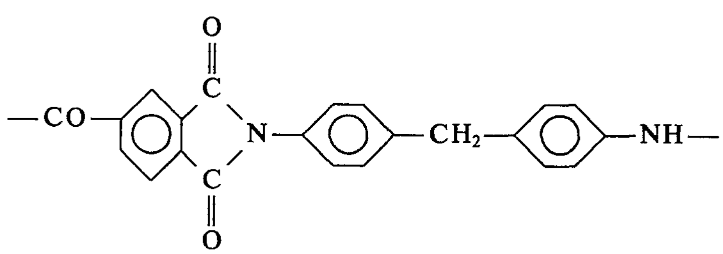

16 % d'unités amide de formule:

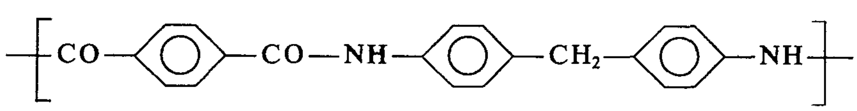

et 4 % d'unités:

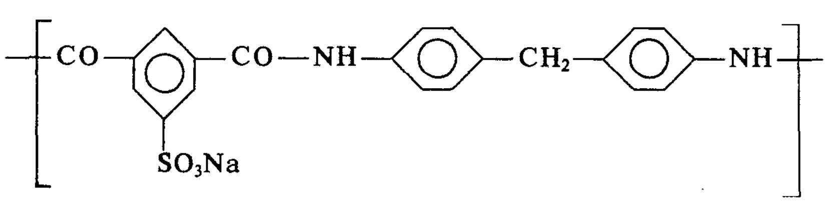

B. On prépare séparément une solution de cellulose à 6% en poids dans le diméthylsulfoxyde

obtenue de la manière suivante:

106 g de pâte Viscokraft de degré de polymérisation 450, comportant 6% d'humidité sont séchés puis introduits dans 1440 g de diméthylsulfoxyde contenant 500 ppm d'eau. On ajoute 125 g de paraformaldéhyde à 96% (rapport paraformaldéhyde/cellulose: 1,20).

On chauffe pendant 5 heures à 135°C sous agitation. Après dissolution, on élimine une partie du paraformaldéhyde par barbotage d'un courant d'azote sec à 120°C ce qui abaisse le rapport paraformaldéhyde/cellulose à 0,35.

A partir des solutions A et B, on prépare par mélange, trois solutions contenant respectivement 10%, 30% et 50% en poids de cellulose par rapport au polyamide-imide (solutions C, D et E) qui sont ensuite filées comparativement à la solution A servant de témoin.

Les quatre solutions sont filées dans les conditions suivantes:

— filière: 64 orifices de diamètre 0,06 mm chacun

— bain coagulant: DMSO/eau en proportion 63/37 en volume à 23°C

| | filaments A | filaments C | filaments D | filaments E |
|---|---|---|---|---|
| — étirage air | 1,33 | 1,3 | 1,3 | 1,3 |
| — lavage à l'eau à contre-courant | oui | oui | oui | oui |
| — étirage eau bouillante | | 1,1 | 1,1 | 1,1 |
| — séchage en séchoir °C | 100 | 100 | 100 | 100 |
| — surétirage sur rouleaux chauffants | | | | |
| température °C | 300 | 300 | 300 | 300 |
| taux | 1,8 | 1,25 | 1,25 | 1,25 |

Les résultats obtenus sont les suivants:

| | Filaments A | Filaments C | Filaments D | Filaments E |
|---|---|---|---|---|
| titre au brin en dtex | 3,3 | 3,3 | 3,3 | 3,3 |
| gonflement primaire % | 250 | 300 | 300 | 300 |
| gonflement secondaire % (après 15 min à l'eau bouillante) | 14 | 24 | 30 | 35 |
| pouvoir de rétention d'eau (Norme DIN 53-814) % | 11 | 26–28 | 32–35 | 55 |
| reprise d'humidité en atmosphère standard (22°C ± 2° à 65% d'H.R.) | 3,2 | 4,2 | 5,8 | 7,6 |

Exemple 2

1. On prépare une solution à 15% en poids dans le diméthylsulfoxyde d'un polyamide-imide tel que décrit dans l'exemple 1A par dissolution à froid pendant 2 heures sous agitation.

2. On prépare séparément une solution de cellulose à 8% dans le diméthylsulfoxyde de la manière suivante:

240 g des pâte Viscokraft de degré de polymérisation 450 comportant 6% d'humidité sont séchés puis introduits dans 2472 g de diméthylsulfoxyde contenant 500 ppm d'eau. On ajoute 288 g de paraformaldéhyde à 96% (rapport paraformaldéhyde/cellulose: 1,2).

On chauffe ce mélange pendant 6 heures à 135°C sous agitation. Après dissolution, on élimine une partie du paraformaldéhyde par dégazage sous air pendant 1 heure à 130°C ce qui abaisse le rapport paraformaldéhyde/cellulose à un taux de 0,46.

On malaxe à froid une partie des deux solutions pendant une heure et on les chauffe à 80° C pendant une heure dans un réacteur à double enveloppe chauffée par de la vapeur d'eau.

Une partie des deux solutions 1 et 2 sont donc mélangées de manière à obtenir des solutions G, H, I, J dont les rapports cellulose/polyamide-imide sont respectivement de 0,1, 0,3, 0,5, 0,8.

Toutes ces solutions après filtration sont filées à travers une filière comportant 64 orifices de diamètre 0,55 mm dans un bain coagulant constitué de diméthylsulfoxyde et d'eau dans un rapport 60/40 en volume, et maintenu à température ambiante. Les filaments obtenus sont ensuite traités de la manière suivante:

| | G | H | I | J |
|---|---|---|---|---|
| Etirage air taux | 1,4 X | 1,2 X | 1,3 X | 1,2 X |
| Lavage | eau + $NH_4OH$ à 30 g/l | | | |
| Séchage sur rouleaux température °C | 320 | 320 | 320 | 320 |
| Surétirage air: | | | | |
| — température °C | 320 | 320 | 320 | 320 |
| — taux | 2,1 X | 1,4 X | 1,1 X | 1,1 X |
| Taux total d'étirage | 2,9 X | 1,7 X | 1,4 X | 1,3 X |

Après ensimage, les filaments ainsi obtenus possèdent les propriétés suivantes:

| | G | H | I | J | |
|---|---|---|---|---|---|
| Titre global dtex | 150 | 171 | 216 | 254 | |
| Ténacité g/tex | 26,7 | 16,2 | 11,6 | 12,6 | |
| Allongement % | 11 | 14,2 | 3,8 | 3,9 | |
| Module g/tex | 584 | 647 | 649 | 738 | |
| | | | | | Fil polyamide-imide témoin |
| Pouvoir de rétention d'eau (norme DIN 53-814) % | 22 | 33 | 35 | 42 | 10 |
| Ienue lumière selon DIN 54 004 (pendant 120 heures) | | | | | |
| Perte de résistance % | 60 | 33 | 61 | 20 | 71 |

**Revendications**

1. Solutions conformables, caractérisées par le fait qu'elles sont constituées de

— cellulose de degré de polymérisation au moins 200
— polyamide-imide
— diméthylsulfoxyde
— formaldéhyde

le rapport pondéral cellulose/polyamide-imide étant compris entre 0,05 et 1, le rapport pondéral formaldéhyde/cellulose entre 0,2 et 2 et la concentration totale de la solution en polymères étant comprise entre 6 et 25% en poids.

2. Solutions selon la revendication 1, caractérisées par le fait que le polyamide-imide contient des enchaînements amide-imide (A) de formule:

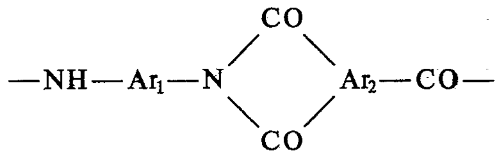

dans laquelle $Ar_1$ représente un radical aromatique divalent et $Ar_2$ représente un radical aromatique trivalent.

3. Solutions selon la revendication 2, caractérisées par le fait que le polyamide-imide contient également des enchaînements amide de formule:

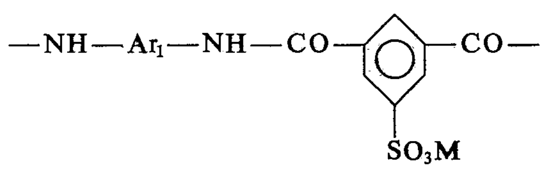

dans laquelle $Ar_1$ représente un radical aromatique divalent et M représente un métal alcalin ou alcalino-terreux.

4. Solutions selon l'une des revendications 2 ou 3, caractérisées par le fiat que le polyamide-imide contient des enchaînements amide (C) de formule:

$$-NH-Ar_1-NH-CO-R-CO-$$

dans laquelle R représente un radical aromatique divalent.

5. Solutions selon la revendication 1, caractérisées par le fait que la concentration totale en polymères est comprise entre 15 et 20% en poids.

6. Solutions selon la revendication 1, caractérisées par le fait que la teneur en eau est inférieure à 5000 ppm.

7. Solutions selon la revendication 1, caractérisées par le fait que le rapport cellulose/polyamide-imide est compris entre 0,1 et 1.

8. Procédé pour l'obtention de solutions conformables selon la revendication 1, caractérisé par le fait que l'on ajoute le polyamide-imide à une solution, dans un mélange de diméthylsulfoxyde et formaldéhyde, de cellulose de degré de polymérisation au moins 200, préalablement séchée, avec un rapport pondéral cellulose/polyamide-imide compris entre 0,05 et 1.

9. Procédé selon la revendication 8, caractérisé par le fait que le polyamide-imide est sous forme de poudre.

10. Procédé selon la revendication 8, caractérisé par le fait que le polyamide-imide est sous forme de solution dans du diméthylsulfoxyde.

11. Fibres, filaments, fils, à base de cellulose et de polyamide-imide, caractérisés par le fait que le rapport pondéral cellulose/polyamide-imide est compris entre 0,05 et 1, que chaque polymère se présente sous forme de fibrilles sensiblement orientées suivant l'axe de la fibre et entrecroisées étroitement, que les macromolécules de cellulose sont partiellement engagées dans un réseau cristallin tridimensionnel caractéristique de la cellulose II.

12. Fils et fibres selon la revendication 11, caractérisés par le fait qu'ils présentent un pouvoir de rétention d'eau déterminé selon la norme DIN 53 814 d'au moins 20% en poids.

13. Fils et fibres selon la revendication 11, caractérisés par le fait que leur pouvoir de rétention d'eau est d'au moins 30% en poids.

14. Procédé pour l'obtention de fils et fibres selon la revendication 11, caractérisé par le fait que l'on file une solution constituée de cellulose de degré de polymérisation au moins 200, d'un polyamide-imide, de diméthylsulfoxyde et de formaldéhyde, le rapport pondéral cellulose/polyamide-imide étant compris entre 0,05 et 1, le rapport pondéral formaldéhyde/cellulose entre 0,2 et 2 et la concentration totale en polymères entre 6 et 25% en poids, dans un bain coagulant constitué de 25 à 80% en volume d'eau et de 75 à 20% en volume de diméthylsulfoxyde, ledit bain étant maintenu entre 0 et 40°C, que l'on oriente ensuite les filaments, qu'on les débarrasse de leur solvant, et qu'on les surétire à une température supérieure à 280°C.

15. Procédé selon la revendication 14, caractérisé par le fait que la solution a une concentration totale en polymère comprise entre 15 et 20% en poids.

16. Procédé selon la revendication 14, caractérisé par le fait que l'on oriente les filaments par étirage.

17. Procédé selon la revendication 14, caractérisé par le fait qu'on lave les filaments à l'eau.

18. Procédé selon la revendication 14, caractérisé par le fait qu'on lave les filaments au moyen d'une

solution aqueuse d'ammoniaque diluée.

**Patentansprüche**

1. Formbare Lösungen, dadurch gekennzeichnet, daß sie bestehen aus:

Cellulose des Polymerisationsgrades mindestens 200,
Polyamidimid,
Dimethylsulfoxid,
Formaldehyd,

wobei das Gewichtsverhältnis Cellulose/Polyamidimid zwischen 0,05 und 1 beträgt, das Gewichtsverhältnis Formaldehyd/Cellulose zwischen 0,2 und 2 beträgt und die Gesamtkonzentration der Lösung an Polymeren zwischen 6 und 25 Gew.-% beträgt.

2. Lösungen gemäß Anspruch 1, dadurch gekennzeichnet, daß das Polyamidimid Amidimidverkettungen (A) der Formel

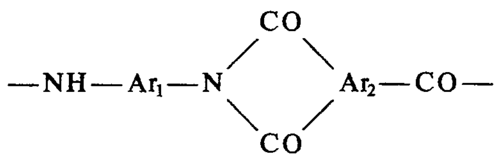

enthält, worin $Ar_1$ einen zweiwertigen aromatischen Rest bedeutet und $Ar_2$ einen dreiwertigen aromatischen Rest bedeutet.

3. Lösungen gemäß Anspruch 2, dadurch gekennzeichnet, daß das Polyamidimid auch Amidverkettungen der Formel

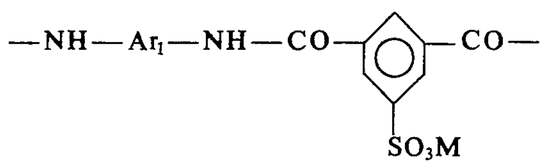

enthält, worin $Ar_1$ einen zweiwertigen aromatischen Rest bedeutet und M ein Alkali- oder Erdalkalimetall bedeutet.

4. Lösungen gemäß einem der Ansprüche 2 oder 3, dadurch gekennzeichnet, daß das Polyamidimid Amidverkettungen (C) der Formel

$$-NH-AR_1-NH-CO-R-CO-$$

enthält, worin R einen zweiwertigen aromatischen Rest bedeutet.

5. Lösungen gemäß Anspruch 1, dadurch gekennzeichnet, daß die Gesamtkonzentration an Polymeren zwischen 15 und 20 Gew.-% beträgt.

6. Lösungen gemäß Anspruch 1, dadurch gekennzeichnet, daß der Gehalt an Wasser unterhalb von 5000 ppm ist.

7. Lösungen gemäß Anspruch 1, dadurch gekennzeichnet, daß das Verhältnis Cellulose/Polyamidimid zwischen 0,1 und 1 liegt.

8. Verfahren zur Herstellung von formbaren Lösungen gemäß Anspruch 1, dadurch gekennzeichnet, daß man das Polyamidimid zu einer Lösung von Cellulose mit dem Polymerisationsgrad mindestens 200, die vorher getrocknet ist, in einem Gemisch von Dimethylsulfoxid und Formaldehyd gibt, mit einem Gewichtsverhältnis Cellulose/Polyamidimid zwischen 0,05 und 1.

9. Verfahren gemäß Anspruch 8, dadurch gekennzeichnet, daß das Polyamidimid in Pulverform vorliegt.

10. Verfahren gemäß Anspruch 8, dadurch gekennzeichnet, daß das Polyamidimid in Form einer Lösung in Dimethylsulfoxid vorliegt.

11. Fasern, Filamente, Fäden auf Basis von Cellulose und Polyamidimid, dadurch gekennzeichnet, daß das Gewichtsverhältnis Cellulose/Polyamidimid zwischen 0,05 und 1 liegt, daß jedes Polymeres in Form von Fibrillen vorliegt, die im wesentlichen entlang der Achse der Faser orientiert sind und eng untereinander durchkreuzt sind, daß die Cellulosemakromoleküle teilweise in ein dreidimensionales Kristallgitter eingebunden sind, das für Cellulose II charakteristisch ist.

12. Fäden und Fasern gemäß Anspruch 11, dadurch gekennzeichnet, daß sie ein Wasserrückhaltevermögen, bestimmt nach der Norm DIN 53 814 von wenigstens 20 Gew.-% aufweisen.

13. Fäden und Fasern gemäß Anspruch 11, dadurch gekennzeichnet, daß ihr Wasserrückhaltevermögen mindestens 30 Gew.-% beträgt.

14. Verfahren zur Erzielung von Fäden und Fasern gemäß Anspruch 11, dadurch gekennzeichnet, daß man eine Lösung, bestehend aus Cellulose mit dem Polymerisationsgrad mindestens 200, einem Polyamidimid, Dimethylsulfoxid und Formaldehyd, wobei das Gewichtsverhältnis Cellulose/Polyamidimid zwischen 0,05 und 1, das Gewichtsverhältnis Formaldehyd/Cellulose zwischen 0,2 und 2 und die Gesamtkonzentration an Polymeren zwischen 6 und 25% in Gewicht liegt, in ein Fällbad, bestehend aus 25 bis 80 Vol.-% Wasser und 75 bis 20 Vol.-% Dimethylsulfoxid verspinnt, wobei das Fällbad zwischen 0 und 40°C gehalten wird, daß man dann die Filamente orientiert, daß man sie von ihrem Lösungsmittel befreit und daß man sie bei einer Temperatur oberhalb 280°C überstreckt.

15. Verfahren gemäß Anspruch 14, dadurch gekennzeichnet, daß die Lösung eine Gesamtkonzentration an Polymerem zwischen 15 und 20 Gew.-% hat.

16. Verfahren gemäß Anspruch 14, dadurch gekennzeichnet, daß man die Filamente durch Verstrecken orientiert.

17. Verfahren gemäß Anspruch 14, dadurch gekennzeichnet, daß man die Filamente mit Wasser wäscht.

18. Verfahren gemäß Anspruch 14, dadurch gekennzeichnet, daß man die Filamente mittels einer verdünnten, wäßrigen Ammoniaklösung wäscht.

**Claims**

1. Shapable polymer solutions comprising

A) cellulose having a degree of polymerization of a least 200
B) polyamide-imide
C) dimethyl sulphoxide, and
D) formaldehyde,

the weight ratio of cellulose/polyamide-imide being between about 0.05 and about 1, the weight ratio of formaldehyde/cellulose being between about 0.2 and about 2 and the total polymer concentration being between about 6 and about 25% by weight.

2. Solutions according to Claim 1, characterised in that the polyamide-imide contains amide-imide linkages (A) of the formula:

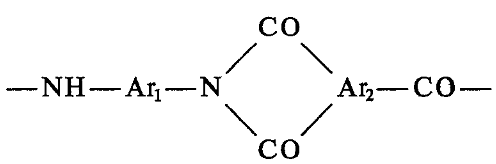

in which $Ar_1$ represents a divalent aromatic radical and $Ar_2$ represents a trivalent aromatic radical.

3. Solutions according to Claim 2, characterised in that the polyamide-imide also contains amide linkages of the formula:

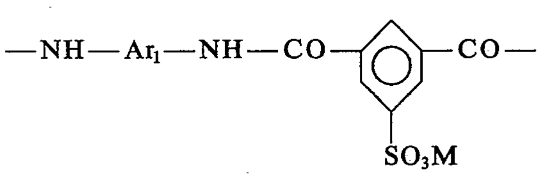

in which $Ar_1$ represents a divalent aromatic radical and M represents an alkali metal or alkaline earth metal.

4. Solutions according to one of Claims 2 or 3, characterised in that the polyamide-imide contains amide linkages (C) of the formula:

$-NH-Ar_1-NH-CO-R-CO-$,

in which R represents a divalent aromatic radical.

5. Solutions according to Claim 1, characterised in that the total polymer concentration is between 15 and 20% by weight.

6. Solutions according to Claim 1, characterised in that the water content of said solution is less than 5000 ppm.

7. Solutions according to Claim 1, characterised in that the cellulose/polyamide-imide ratio is between 0.1 and 1.

8. Process for the production of solutions which can be shaped, according to Claim 1, characterised

in that the polyamide-imide is added to a solution, in a mixture of dimethyl sulphoxide and formaldehyde, of cellulose having a degree of polymerisation of at least 200, which has been dried beforehand, with a weight ratio cellulose/polyamide-imide of between 0.05 and 1.

9. Process according to Claim 8, characterised in that the polyamide-imide is in powder form.

10. Process according to Claim 8, characterised in that the polyamide-imide is in the form of a solution in dimethyl sulfphoxide.

11. Fibres, filaments and yarns based on cellulose and polyamide-imide, characterised in that the weight ratio cellulose/polyamide-imide is between 0.05 and 1, in that each polymer is in the form of fibrils substantially orientated along the axis of the fibre and closely intersecting, and in that the cellulose macromolecules are partially involved in a three-dimensional crystal lattice characteristic of cellulose II.

12. Yarns and fibres according to Claim 11, characterised in that they have a water retention capacity of at least 20% by weight, determined in accordance with DIN Standard Specification 53 814.

13. Yarns and fibres according to Claim 11, characterised in that their water retention capacity is at least 30% by weight.

14. Process for the production of yarns and fibres, according to Claim 11, characterised in that a solution consisting of cellulose having a degree of polymerisation of at least 200, a polyamide-imide, dimethyl sulphoxide and formaldehyde, the weight ratio cellulose/polyamide-imide being between 0.05 and 1, the weight ratio formaldehyde/cellulose being between 0.2 and 2 and the total polymer concentration being between 6 and 25% by weight, is spun into a coagulating bath consisting of 25 to 80% by volume of water and 75 to 20% by volume of dimethyl sulphoxide, the said bath being kept at between 0 and 40° C, in that the filaments are then orientated, in that they are freed of their solvent, and in that they are overstretched at a temperature above 280° C.

15. Process according to Claim 14, characterised in that the solution has a total polymer concentration of between 15 and 20% by weight.

16. Process according to Claim 14, characterised in that the filaments are orientated by stretching.

17. Process according to Claim 14, characterised in that the filaments are wasched with water.

18. Process according to Claim 14, characterised in that the filaments are washed by means of a dilute aqueous ammonia solution.